# EUROPEAN PATENT SPECIFICATION

(11) **EP 0 508 528 B1**
(45) Date of publication and mention of the grant of the patent: **21.06.1995**
(21) Application number: 92200935.2
(22) Date of filing: 02.04.1992
(51) Int. Cl.: F16D 33/06, F16H 45/02

(54) **Fluid coupling of emptying type with continuous flow control of the fluid fed into the operating circuit, with or without an internal system for direct connection between the drive shaft and driven shaft**
Entleerende Flüssigkeitskupplung mit kontinuierlicher Steuerung der Flüssigkeitsmenge zur Speisung des Arbeitsraums, mit oder ohne interner Vorrichtung zum Direktverbinden der treibenden und getriebenen Welle
Accouplement hydrodynamique de type à vidange, avec réglage continu du débit de fluide alimenté dans le circuit de travail, avec ou sans dispositif interne pour l'accouplement direct de l'arbre d'entrée à l'arbre de sortie

(30) Priority: 09.04.1991 IT MI910977
(43) Date of publication of application: 14.10.1992
(73) Proprietor: TRANSFLUID S.r.l., 20016 Pero (Milano) (IT)
(72) Inventor: Pavesi, Ugo, I-20121 Milan (IT)
(74) Representative: Fusina, Gerolamo

(56) References cited:
- DE-A- 1 750 761
- FR-A- 2 346 601
- FR-A- 2 573 151
- FR-E- 69 853
- PATENT ABSTRACTS OF JAPAN vol. 11, no. 14 (M-553)(2461) 14 January 1987, & JP-A-61189330 (TOYOTA MOTOR CORPORATION) 23 August 1986

## Description

This invention relates to a fluid coupling of emptying type according to the preamble of claim 1 and known from the documents FR-69 853 and JP-61 189 330.

Fluid couplings consist in known manner of two mutually facing semi-toroidal impellers provided with inner blading and known as the pump and turbine respectively.

The pump, fixed to the shaft of the motor, acts indirectly, by way of a fluid, on the turbine which is connected to the shaft of the user apparatus, the fluid, usually a oil, being fed into the toroidal cavity defined by said impellers, between which torque is transmitted under conditions of slip, resulting in a continuous energy loss demonstrated by the heating of the oil.

Particularly in fluid couplings of higher power, at the commencement of operation the toroidal cavity is empty, the pump and turbine being consequently completely disengaged from each other. A progressive metered oil feed into the radially inner part of the impellers gradually increases the engagement of the pump, which transmits to the turbine a torque of increasing value to obtain the required gradualness in the starting of the user apparatus without subjecting the motor structure to undesirable stress peaks.

During the operation of the coupling, the oil in the operating circuit is distributed by centrifugal force mainly into the peripheral region of the impellers, from which a part of it continually escapes through peripheral sized holes provided in the outside of the drive part. The presence of these exit holes which, inversely, starting from a totally or partly full chamber, would result in the emptying of the chamber after a certain time and hence the mutual disengagement of the impellers, consequently justifies the classification of these couplings as "emptying couplings".

The hot oil leaving the peripheral holes is recirculated and returned to the impeller cavity after cooling; consequently the level of filling of the cavity is determined by a balance between the entry flow provided by a feed pump, and the exit flow through the peripheral sized holes.

Fluid couplings are therefore not only used for the gradual starting of a user unit and for then maintaining its speed, but also because of the facility for totally decoupling the motor from the user, for example in the case of a fault or blockage in this latter.

In the current state of the art, the coupling is generally filled with fluid from the operating circuit via valves which provide intermittent flow, making it laborious to achieve precise and variation-free control of the rotation speed of the output shaft connected to the user apparatus.

With regard to rapid decoupling of the pump from the turbine in the case of a fault in the user apparatus, various known devices are available for rapidly emptying the fluid from the operating circuit, but none has proved able to obtain the desired effect within a time short enough to prevent serious kick-back against the motor.

An object of the present invention is therefore to obviate said drawbacks by providing a fluid coupling of the known emptying type comprising a feed device providing a variable and continuously controllable flow rate and, jointly or separately, means for enabling the coupling to decouple within a very short time in the case of a fault in the user apparatus, while at the same time maintaining a compact and relatively economical coupling construction.

A further object of the invention is to be able to exclude the fluid coupling in those cases, usually more numerous, in which the user apparatus is designed to operate normally at a rotation speed equal to that of the motor, in order to prevent unnecessary wastage of energy due to the circulation of the oil after the coupling has performed its main purpose of gradually starting the user apparatus.

These objects are attained by a fluid coupling of emptying type according to claim 1.

Continuously varying the feed pump delivery rate enables the filling level of the operating chamber of the coupling impellers to be adjusted quickly and with accuracy, for the purpose of providing the required output speed to the shaft of the user apparatus.

Particularly in the case of the preferred embodiment consisting of a pump driven by a variable speed motor associated with a frequency converter, the pump delivery rate can be automatically controlled by providing a microprocessor which receives signals representative of the speed of the input and output shafts of the coupling and processes them to achieve the exact degree of filling of the operating circuit in accordance with a diagram of gradual approach.

In the case of fault or blockage in the user apparatus the feed pump can be halted under the control of a current transducer connected into the power line to the main motor, which transducer, on sensing a abnormal current absorption for a time greater than a predetermined time, feeds either directly or via the microprocessor a signal arranged to halt the feed pump motor and to actuate other expedients of known type for emptying the operating chamber.

Advantageously the fluid coupling can also be provided with a device for connecting together the entry and exit shafts, consisting of a clutch with friction discs housed in the radially inner space of the impellers and arranged to directly connect said shafts together when they have very nearly reached the same speed, taking into account the slip which always exists between the coupling pump and turbine.

The friction disc clutch is operated by its own hydraulic circuit, which is separate from the feed circuit and uses the same type of oil as used for the operating circuit, said oil being pressurized by an independent pump the operation of which can be controlled either manually or via the same microprocessor which receives the signals representative of the speed of the entry and exit shafts.

In this latter case the command for the operation of the pump of the clutch device is provided by the microprocessor when the signals from the coupling entry shaft and exit shaft speed sensors indicate that the optimum condition for engaging the two shafts has been reached. The feed pump is then also halted to allow the coupling to empty so that its operation can proceed with the cavity empty and hence without undesirable energy loss.

In the case of a fault or accident to the user apparatus the microprocessor, on the basis of a signal originating from a sudden peak in the current absorbed by the main motor, instantly stops the pump of the clutch device, so disengaging the shafts from each other and hence perfectly safeguarding the unit, which in this case is already operating with the operating cavity empty of feed oil.

Further details of the invention will be apparent from the description of a preferred but not exclusive embodiment thereof given hereinafter by way of non-limiting example with reference to the accompanying drawings, in which:
Figure 1 is a simplified cross-section through the parts of a fluid coupling of emptying type according to the invention;
Figure 2 is a schematic representation of the fluid coupling of emptying type according to the invention connected to its service members; and
Figure 3 represents the connection scheme for the control devices for operating the fluid coupling when connected to a user unit.

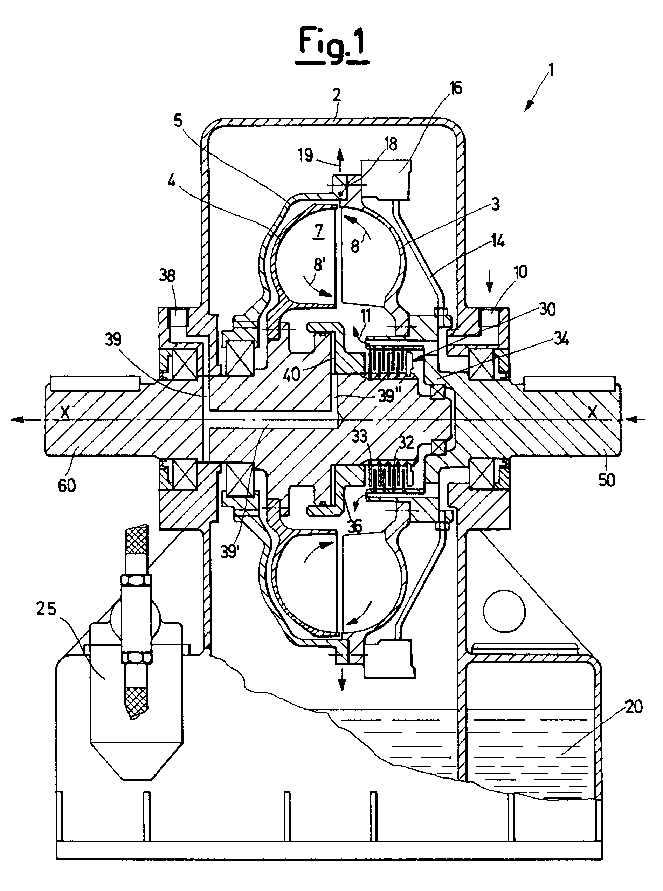

In Figure 1 the fluid coupling of emptying type, indicated overall by 1, consists essentially of an outer casing 2 housing two impellers 3 and 4, known respectively as the pump and turbine, which can rotate independently of each other about the same axis X-X. Coaxial with this axis are the shaft 50, driven generally by an electric motor and connected to the pump 3, and the exit shaft 60, which is fixed to the turbine 4 and is connected to a user apparatus.

The pump 3 rotates an opposing shell 5, the purpose of which is to create a sealed box housing the turbine 4. The pump 3 and turbine 4, provided in known manner with respective radial blades, directly face each other to define between them a cavity 7 into which the operating fluid is fed to act as an intermediary between said members, and rotate the turbine at a lower speed than the pump, the speed difference depending on the resistance offered by the user apparatus and the degree of filling of the cavity 7. The vorticose movement of the fluid within the cavity, expressed indicatively by the arrows 8, 8', results in a power loss and an increase in the fluid temperature.

The operating fluid, consisting of an oil, is fed in through an inlet connector 10 and leaves in a position radially internal to the impellers 3 and 4, indicated by the arrow 11, to feed the coupling. A branch 14 leads the same oil to a rapid discharge valve 16 of known type. On interrupting the flow of fluid to the operating circuit and hence also halting oil feed to the branch 14, the valve 16 opens to allow rapid discharge of the oil, which during the operation of the coupling partly escapes continuously through sized holes 18 formed peripherally in the shell 5, as indicated by the arrows 19.

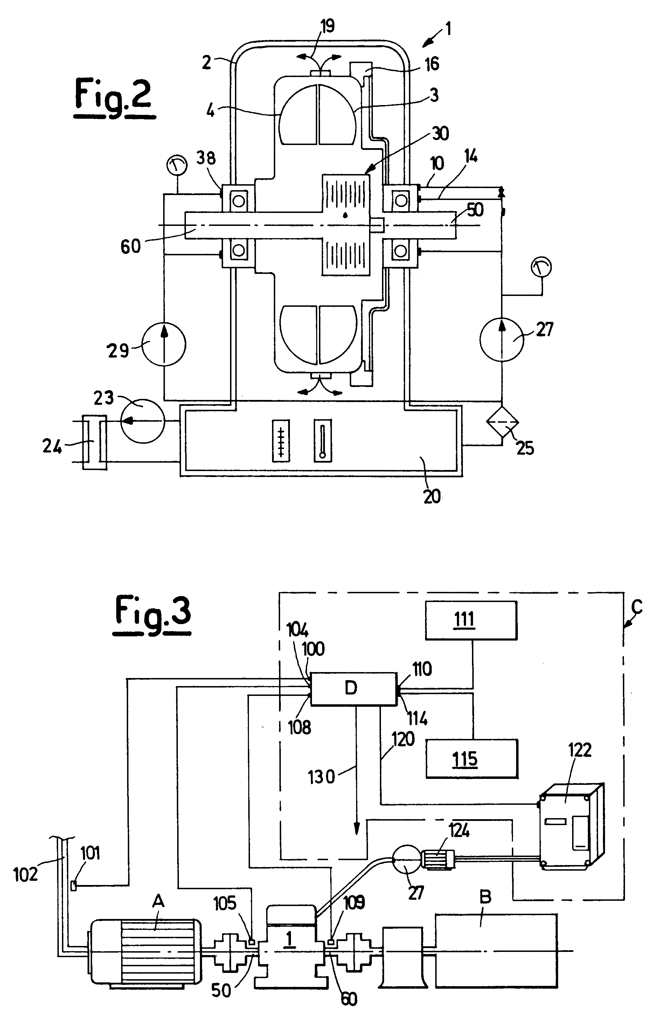

With reference to Figures 2 and 3, the oil which collects on the bottom 20 of the casing 2 is fed by a pump 23 to a cooling circuit 24, and after filtration in 25 is returned to circulation by the pump 27.

According to the invention, to achieve gradual filling of the cavity 7 in order to enable the exit shaft 60 to achieve the required rotation speed, the coupling is provided with a feed pump 27 with a delivery rate continuously controllable in accordance with a regular diagram. For this purpose a variable rate pump driven by a fixed motor can be used, or alternatively a pump the delivery rate of which is a function of its r.p.m., such as a gear pump, driven by a fixed speed electric motor in series with a variable speed drive of any kind, or again according to a preferred alternative the pump can be driven directly by a variable speed electric motor the rotation speed of which is regulated by a frequency converter.

The frequency converter can be controlled manually from a control panel C which shows the speed of the exit shaft 60, or can be controlled automatically. In this latter case, according to the invention a microprocessor D is used, which with reference to Figure 3 comprises:
- an input 100 for signals originating from a current transducer 101 connected into the power line 102 for the electric motor A;
- an input 104 connected to a transducer 105 for the signal indicating the speed of the entry shaft 50; and
- an input 108 connected to a transducer 109 for the signal indicating the speed of the exit shaft 60.

The microprocessor also has the following inputs:
- 110 for the selector 111 which selects the speed required for the exit shaft 60;
- 114 for the start signal 115.

In its output, the microprocessor acts by controlling the frequency converter 122 for the motor 124 of the feed pump 27 via the line 120 on the basis of the processing of the arriving signals 104 and 108 representing the speeds of the shafts 50 and 60 respectively, and controlling the pump 29 of a separate engagement and disengagement circuit for the shafts 50 and 60 via the line 130, as described hereinafter.

In those cases, forming a large majority, in which after gradual starting of the user apparatus it is required to lock the shafts 50 and 60 together and make the impellers 3 and 4 run empty to hence eliminate the continuous power loss inherent in the operation of fluid couplings, according to the present invention a means is provided for connecting the shafts together, this means being located advantageously, and as never before, within the coupling itself leading to a substantial saving in the manufacturing cost and overall size of the coupling.

The means for coupling the shafts together, indicated overall by 30 in Figures 1 and 2, consists of a clutch comprising friction discs 33, 32 fixed alternately to the exit shaft 60 and to a flange 34 rigid with the entry shaft 50 respectively.

The friction discs are engaged by the thrust of a ring piston 36 operated by pressurized oil of the type used in the operating circuit, and fed through a separate circuit. The oil, pressurized by the independent pump 29 (Figure 2), enters the coupling through an entry connector 38, follows the path 39, 39', 39'' within the shaft 60 and enters the thrust chamber 40 for said ring piston 36, to connect the coupling shafts together as stated. Inversely, interrupting the operation of the pump 29 when the shafts 50 and 60 have been connected together very rapidly removes the thrust from the pack of friction discs 32, 33, to disengage the motor A from the user B with a rapidity not currently attainable with known devices. With the internal coupling device 30 present, the microprocessor activates the friction clutch via the line 130 following processing of the signals fed by the transducers 105 and 109, to start the pump 29, or to stop it on receipt by the input 100 of a signal representing excess current in the motor A, hence halting the pump.

A fluid coupling of the type described and illustrated can be used in the most varied ways, including for example:
a) to operate fans, centrifugal blowers or compressors;
b) hammer mills, ball mills, rock and scrap metal crushers, wood grinders;
c) electrical generator units operated by internal combustion engines;
d) belt conveyors for medium-sized plants or mines.

Depending on its use, the fluid coupling with continuous flow control of the operating fluid may also comprise the internal device for direct connection between the entry and exit shaft, this being particularly useful if the user apparatus can run at the same working speed as the motor, for example when used for operating fans, electrical generator units, belt conveyors, etc.

## Claims

1. A fluid coupling (1) of emptying type comprising a means for continuously controlling the quantity of fluid fed into the operating circuit of said coupling (1), and possibly a means (30) located in the interior of the coupling (1) and controllable from the outside for directly connecting the drive shaft (50) to the driven shaft (60), characterised in that the continuous control of the quantity of fluid fed into the operating circuit is effected by a pump (27) operated by an electric motor (124).

2. A fluid coupling (1) as claimed in claim 1, characterised in that said electric motor (124) is a fixed-speed electric motor in series with a variable speed drive of any type.

3. A fluid coupling (1) as claimed in claim 1, characterised in that the delivery rate of said pump (27) is continuously varied directly by controlling the rotation speed of said electric motor (124), wherein the speed control being obtained by a frequency converter (122).

4. A fluid coupling (1) as claimed in claim 1, characterised in that said pump (27) a pump of variable delivery rate and said electric motor (124) a fixed-speed electric motor.

5. A fluid coupling (1) as claimed in claim 1 and in any of claims 2 to 4, characterised in that the possible means located in the interior of the coupling (1) for directly connecting the drive shaft (50) to the driven shaft (60) is a friction disc device (30) operated hydraulically by a fluid fed by a further pump (29) incorporated into a separate circuit.

6. A fluid coupling (1) as claimed in claim 5, characterised in that the friction disc device (30) is put into the connecting state when the driven shaft (60) of the fluid coupling (1) has reached its maximum possible rotation speed, close to the rotation speed of the drive shaft (50), at which moment the emptying of the fluid coupling operating circuit is commenced.

7. A fluid coupling (1) as claimed in one or more of claims 1 to 6, characterised by using a microprocessor (D) the inputs (104, 108, 100) of which are connected to means (105, 109) for measuring the speed of the entry and exit shafts (50, 60) of the coupling (1) and means (101) for measuring the current absorbed by the main drive motor (A), the output (110, 114) of said microprocessor (D) being connected to the means (120, 130) for continuously controlling the quantity of fluid fed into the operating circuit and to the control circuit of the possible means (30) for connecting said entry and exit shafts (50, 60) of the fluid coupling (1) together.

## Patentansprüche

1. Fluidkupplung (1) vom entleerenden Typ, umfassend ein Mittel zum kontinuierlichen Steuern bzw. Regeln der Menge des in den Betriebskreislauf der Kupplung (1) zugeführten Fluids, und möglicherweise ein sich in dem Inneren der Kupplung (1) befindendes und von außen her steuer- bzw. regelbares Mittel (30) zum direkten Verbinden der Antriebswelle (50) mit der angetriebenen Welle (60), dadurch **gekennzeichnet,** daß die kontinuierliche Steuerung bzw. Regelung der Menge des in den Betriebskreislauf zugeführten Fluids mittels einer Pumpe (27) bewirkt wird, die durch einen elektrischen Motor (124) betrieben wird.

2. Fluidkupplung (1) nach Anspruch 1, dadurch **gekennzeichnet,** daß der elektrische Motor (124) ein elektrischer Festgeschwindigkeitsmotor in Reihe mit einem Antrieb variabler Geschwindigkeit von irgendeiner Art ist.

3. Fluidkupplung (1) nach Anspruch 1, dadurch **gekennzeichnet,** daß die Abgaberate der Pumpe (27) direkt kontinuierlich verändert wird durch Steuern bzw. Regeln der Drehgeschwindigkeit des elektrischen Motors (124), worin die Geschwindigkeitssteuerung bzw. -regelung durch einen Frequenzwandler (122) erreicht wird.

4. Fluidkupplung (1) nach Anspruch 1, dadurch **gekennzeichnet,** daß die Pumpe (27) eine Pumpe von variabler Abgaberate und der elektrische Motor (124) ein elektrischer Festgeschwindigkeitsmotor ist.

5. Fluidkupplung (1) nach Anspruch 1 sowie nach irgendeinem der Ansprüche 2 bis 4, dadurch **gekennzeichnet,** daß das mögliche Mittel zum direkten Verbinden der Antriebswelle (50) mit der angetriebenen Welle (60), das sich im Inneren der Kupplung (1) befindet, eine Reibungsscheibeneinrichtung (30) ist, die hydraulisch durch ein Fluid betrieben wird, das durch eine weitere Pumpe (29) zugeführt wird, die in einen separaten Kreislauf eingebaut ist.

6. Fluidkupplung (1) nach Anspruch 5, dadurch **gekennzeichnet,** daß die Reibungsscheibeneinrichtung (30) in den Verbindungszustand gesetzt wird, wenn die angetriebene Welle (60) der Fluidkupplung (1) ihre maximal mögliche Drehgeschwindigkeit erreicht hat, nahe der Drehgeschwindigkeit der Antriebswelle (50), in welchem Moment das Entleeren des Fluidkupplungsbetriebskreislaufs begonnen wird.

7. Fluidkupplung (1) nach einem oder mehreren der Ansprüche 1 bis 6, **gekennzeichnet** durch die Verwendung eines Mikroprozessors (D), dessen Eingänge (104, 108, 100) mit einem Mittel (105, 109) zum Messen der Geschwindigkeit der Eingangs- und Ausgangswelle (50, 60) der Kupplung (1) und einem Mittel (101) zum Messen des durch den Hauptantriebsmotor (A) aufgenommenen Stroms verbunden sind, wobei der Ausgang (110, 114) des Mikroprozessors (D) mit dem Mittel (120, 130) zum kontinuierlichen Steuern bzw. Regeln der Menge des in den Betriebskreislauf eingespeisten Fluids und mit der Steuer- bzw. Regelschaltung des möglichen Mittels (30) zum Miteinanderverbinden der Eingangs- und Ausgangswelle (50, 60) der Fluidkupplung (1) verbunden ist.

## Revendications

1. Accouplement hydrodynamique (1) de type à vidange, comprenant des moyens pour le réglage continu de la quantité de fluide alimenté dans le circuit de travail dudit accouplement (1) et éventuellement un moyen (30) positionné à l'intérieur dudit accouplement (1), réglable de l'extérieur pour connecter directement l'arbre moteur (50) à l'arbre récepteur (60), caractérisé en ce que le réglage continu de la quantité de fluide alimenté dans le circuit de travail est effectué par une pompe (27) actionnée par un moteur électrique (124).

2. Accouplement hydrodynamique (1) selon la revendication 1, caractérisé en ce que ledit moteur électrique (124) est un moteur électrique à vitesse fixe en série avec un moteur à vitesse variable de n'importe quel type.

3. Accouplement hydrodynamique (1) selon la revendication 1, caractérisé en ce que le débit de ladite pompe (27) varie de façon continue en fonction du réglage de la vitesse de rotation dudit moteur électrique (124) dans lequel le réglage de vitesse est obtenu à l'aide d'un convertisseur de fréquence (122).

4. Accouplement hydrodynamique (1) selon la revendication 1, caractérisé en ce que ladite pompe (27) est une pompe à taux de sortie variable et ledit moteur électrique (124) est un moteur électrique à vitesse fixe.

5. Accouplement hydrodynamique (1) selon la revendication 1 et selon l'une quelconque des revendications 2 à 4, caractérisé en ce que les moyens éventuels disposés à l'intérieur de l'accouplement (1) pour connecter directement l'arbre moteur (50) à l'arbre récepteur (60) sont un dispositif à friction (30) actionné hydrauliquement par un fluide venant d'une pompe (29) disposé sur un circuit séparé.

6. Accouplement hydrodynamique (1) selon la revendication 5, caractérisé en ce que le dispositif à friction (30) est positionné dans un état embrayé lorsque l'arbre récepteur (60) de l'accouplement hydrodynamique (1) a atteint sa vitesse de rotation maximum, proche de la vitesse de rotation de l'arbre moteur (50), lorsque la vidange du circuit du fluide d'accouplement est commencée.

7. Accouplement hydrodynamique (1) selon l'une au moins des revendications 1 à 6, caractérisé en ce qu'on utilise un microprocesseur (D), sur les entrées (104, 108, 100) duquel sont connectés des moyens (105, 109) pour mesurer la vitesse de l'arbre d'entrée (50) et de l'arbre de sortie (60) de l'accouplement (1) et des moyens (101) pour mesurer le courant absorbé par le moteur principal (A), la sortie (110, 114) dudit microprocesseur (D) étant connectée aux moyens (120, 130) pour régler de façon continue la quantité de fluide alimenté vers le circuit de travail et vers le circuit de réglage des moyens éventuels (30) pour connecter ensemble ledit arbre d'entrée (50) et ledit arbre de sortie (60) de l'accouplement hydrodynamique (1).
